(19) **Europäisches Patentamt / European Patent Office / Office européen des brevets**

(11) **EP 3 523 998 B1**

(12) **FASCICULE DE BREVET EUROPEEN**

(45) Date de publication et mention de la délivrance du brevet:
**26.07.2023 Bulletin 2023/30**

(21) Numéro de dépôt: **17793693.7**

(22) Date de dépôt: **02.10.2017**

(51) Classification Internationale des Brevets (IPC):
**H04W 12/062** (2021.01)    **H04W 12/069** (2021.01)
**H04W 12/122** (2021.01)    **H04W 12/126** (2021.01)
**H04W 56/00** (2009.01)

(52) Classification Coopérative des Brevets (CPC):
**H04W 56/001; H04W 12/062; H04W 12/069; H04W 12/122; H04W 12/126**

(86) Numéro de dépôt international:
**PCT/FR2017/052695**

(87) Numéro de publication internationale:
**WO 2018/065712 (12.04.2018 Gazette 2018/15)**

(54) **PROCÉDÉ D'AUTHENTIFICATION MUTUELLE ENTRE UN ÉQUIPEMENT UTILISATEUR ET UN RÉSEAU DE COMMUNICATION**

**VERFAHREN ZUR GEGENSEITIGEN AUTHENTIFIZIERUNG ZWISCHEN EINEM BENUTZERGERÄT UND EINEM KOMMUNIKATIONSNETZ**

**METHOD FOR MUTUAL AUTHENTICATION BETWEEN USER EQUIPMENT AND A COMMUNICATIONS NETWORK**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **04.10.2016 FR 1659583**

(43) Date de publication de la demande:
**14.08.2019 Bulletin 2019/33**

(73) Titulaire: **Orange**
**92130 Issy-les-Moulineaux (FR)**

(72) Inventeurs:
• **RICHARD, Benjamin**
**92326 Châtillon Cedex (FR)**
• **GAMISHEV, Todor**
**92326 Châtillon Cedex (FR)**
• **MACARIO-RAT, Gilles**
**92326 Châtillon Cedex (FR)**

(74) Mandataire: **Plasseraud IP**
**66, rue de la Chaussée d'Antin**
**75440 Paris Cedex 09 (FR)**

(56) Documents cités:
**EP-A1- 1 603 361        WO-A1-2016/137374**
**WO-A2-2007/102702    GB-A- 2 365 688**

**Description**

La présente invention concerne le domaine de l'accès à un réseau de communication, et plus particulièrement la sécurité de l'authentification lors de l'accès à ce réseau.

Dans le cadre des réseaux mobiles de type 3G et 4G, l'organisme « 3GPP » (« Third Génération Partnership Project ») a défini des protocoles destinés à garantir la sécurité de l'accès d'un client à un réseau mobile. En particulier, les protocoles « UMTS AKA » (de l'anglais « Universal Mobile Télécommunications System » et « Authentication and Key Agreement ») et « EPS AKA » (pour « Evolved Packet System ») décrivent une authentification mutuelle et l'établissement de clés de session destinées à assurer la confidentialité et l'intégrité de données échangées entre le client et le réseau mobile lors de l'accès au réseau.

Les protocoles AKA définissent ainsi des échanges d'une authentification mutuelle entre le réseau et le client. L'authentification repose sur le fait que le client, plus précisément un élément de sécurité (« Secure Element » en anglais), par exemple une carte UICC/USIM (pour « Universal Integrated Circuit Card/Universal Subscriber Identity Module ») comprise dans un équipement client tel qu'un terminal mobile, et le réseau partagent la connaissance d'une même clé secrète, nommée habituellement « clé d'authentification K » qui est utilisée pour générer des vecteurs d'authentification utilisés lors de l'authentification, et pour dériver des clés telles que des clés de chiffrement de la voie radio et de contrôle d'intégrité.

On comprend que la compromission d'une telle clé secrète partagée par le client et le réseau remet en cause la sécurité du réseau mobile. La clé d'authentification K peut ainsi être compromise, par exemple dans le cas de cartes UICC/USIM mal implémentées ou de failles de sécurité chez des encarteurs qui ont pour rôle d'injecter ces clés dans des cartes UICC/USIM, ou par des clients indélicats. Une telle compromission peut avoir comme conséquence la création de clones de cartes UICC/USIM, l'utilisation d'une carte clonée permettant alors de se faire passer pour un abonné légitime. Dans des conditions particulières d'utilisation, qui nécessitent des connaissances poussées sur les algorithmes cryptographiques utilisés et l'interception d'un aléa lors de l'accès au réseau, il est également possible d'intercepter des communications.

La publication brevet GB2365688A décrit un procédé d'authentification entre un équipement utilisateur et un réseau de communication utilisant des numéros de séquence.

Un des buts de l'invention est de remédier à des insuffisances/inconvénients de l'état de la technique et/ou d'y apporter des améliorations.

La présente invention est définie par l'objet des revendications indépendantes. Des modes de réalisation particuliers sont définis par les revendications dépendantes.

A cette fin, l'invention propose un procédé d'authentification mutuelle entre un équipement utilisateur et un réseau de communication, ledit réseau comprenant une entité de gestion de la mobilité et un serveur d'abonnés, ledit procédé, mis en oeuvre par l'équipement utilisateur, comprenant :

- réception d'un challenge d'authentification comprenant un jeton d'authentification, fonction d'un premier index et d'un premier message d'authentification calculé par le serveur d'abonnés et fonction d'un premier numéro de séquence,
- vérification qu'une des conditions appartenant à un ensemble de conditions est vraie, ledit ensemble de conditions comprenant :

  - le premier numéro de séquence est identique à un deuxième numéro de séquence mémorisé dans l'équipement utilisateur, et
  - le premier numéro de séquence est identique à la valeur précédente du deuxième numéro de séquence et le premier index est strictement supérieur à un deuxième index mémorisé dans l'équipement client,

- calcul et envoi, lorsque l'une des conditions est vraie, d'un résultat d'authentification et d'un message d'authentification, fonction de la valeur précédente du deuxième numéro de séquence, ledit résultat d'authentification étant destiné à être vérifié pour authentifier l'équipement utilisateur.

Le procédé d'authentification mutuelle décrit ici permet de renforcer la sécurité du réseau mobile. En effet, en cas de compromission d'une clé secrète maître appelée « clé d'authentification K », partagée par l'équipement utilisateur et le réseau, plus précisément le serveur d'abonnés, et utilisée pour calculer le jeton d'authentification AUTN et un ensemble de données cryptographiques telles que des clés de session, un attaquant qui aurait cloné un équipement utilisateur, plus précisément un élément de sécurité de l'équipement utilisateur, ne pourrait pas utiliser ce clone pour se faire passer pour un abonné légitime. En effet, l'attaquant ne peut pas immédiatement obtenir le numéro de séquence du serveur ou du client, nécessaire lors d'une session d'accès au réseau pour s'assurer de la synchronisation entre les deux équipements. Le jeton d'authentification qui est transmis à travers le réseau ne transporte plus le numéro de séquence du réseau masqué par une clé d'anonymisation générée à partir de la clé d'authentification K, comme cela est décrit par exemple dans la spécification TS 33.102. A la place il transporte uniquement un message d'authentification calculé à partir de ce numéro de séquence. Il est donc impossible pour l'attaquant d'obtenir le numéro de séquence.

Par ailleurs, une nouvelle valeur, appelée index a été introduite lors de la génération de jetons d'authentification. Un tel index, géré au niveau du serveur d'abonnés et au niveau de l'équipement utilisateur permet de détecter des désynchronisations entre les numéros de séquence gérés respectivement au niveau du serveur d'abonnés et au niveau de l'équipement utilisateur. Il est par ailleurs avantageusement utilisé pour resynchroniser spontanément le serveur d'abonnés et l'équipement utilisateur. « Spontanément » signifie que des commandes explicites de resynchronisation n'ont plus besoin d'être envoyées par l'équipement utilisateur en cas de désynchronisation.

Ainsi, il n'est plus possible pour un attaquant de tracer un équipement utilisateur dans le réseau à partir de commandes de resynchronisation qu'il émettrait suite à une désynchronisation avec le réseau. Une telle traçabilité n'est pas admissible dans un contexte de respect de la vie privée et constitue de ce fait un problème de sécurité dans le réseau mobile.

Dans un premier exemple de réalisation, correspondant au cas où le premier numéro de séquence est identique au deuxième numéro de séquence, procédé comprend :

- incrément du deuxième numéro de séquence, et
- réinitialisation du deuxième index.

Dans cet exemple, l'équipement utilisateur et le serveur d'abonnés sont synchronisés. L'élément de sécurité, qui calcule et envoie le résultat d'authentification suite à la réception du jeton d'authentification incrémente alors le deuxième numéro de séquence qu'il gère. Cet incrément est représentatif de l'envoi du résultat d'authentification à l'entité de gestion de la mobilité.

Dans un deuxième de réalisation, correspondant au cas où le premier numéro de séquence est identique à la valeur précédente du deuxième numéro de séquence et que le premier index est strictement supérieur à un deuxième index mémorisé dans l'équipement client, le procédé comprend :

- mémorisation dans le deuxième index du premier index.

Cet exemple correspond au cas où l'équipement utilisateur et le serveur d'abonnés sont désynchronisés d'un pas. Une telle désynchronisation est consécutive à la perte d'un message lors de l'établissement d'une session précédente. Par exemple, une réponse d'authentification envoyée par l'équipement utilisateur n'a pas été reçue par l'entité de gestion de la mobilité ou le message d'authentification envoyé par l'entité de gestion de la mobilité au serveur d'abonnés a été perdu. Dans ce cas, le numéro de séquence n'est pas incrémenté par l'équipement utilisateur et le deuxième index est mis à jour en fonction du premier index. Le premier et le deuxième index donnent ainsi une indication du nombre d'authentifications inachevées. A noter qu'avec cet exemple, la désynchronisation du numéro de séquence reste de un pas, quel que soit le nombre d'authentifications inachevées.

Les deux exemples précédents qui correspondent aux deux conditions vérifiées par l'équipement utilisateur, permettent à celui-ci de détecter une désynchronisation et de se mettre en quelque sorte en attente d'une resynchronisation du serveur d'abonnés. Ainsi, la resynchronisation n'est plus consécutive à une demande explicite, consécutive à la détection d'une désynchronisation, et n'implique plus l'envoi par l'équipement utilisateur d'un numéro de séquence que doit mémoriser le serveur d'abonnés. De telles demandes de resynchronisation peuvent être détectées par un attaquant qui peut alors tracer un équipement utilisateur en forçant des désynchronisations. Une telle traçabilité n'est pas souhaitable dans un réseau de télécommunications mobiles.

Ainsi le procédé d'authentification mutuelle décrit ici ne permet plus à un attaquant de tracer un équipement utilisateur en suivant les demandes de resynchronisation puisque ces demandes n'ont plus lieu d'être.

L'invention porte aussi sur un procédé d'authentification mutuelle entre un équipement utilisateur et un réseau de communication, ledit réseau comprenant une entité de gestion de la mobilité et un serveur d'abonnés, ledit procédé, mis en oeuvre par le serveur d'abonnés comprenant :

- réception d'une requête de données d'authentification,
- calcul et envoi à l'entité de gestion de la mobilité d'une donnée d'authentification comprenant une résultat attendu d'authentification et un jeton d'authentification, ledit jeton d'authentification étant fonction d'un index et d'un premier message d'authentification fonction d'un premier numéro de séquence,
- réception d'un deuxième message d'authentification, fonction de la valeur précédente d'un deuxième numéro de séquence mémorisé dans l'équipement utilisateur,
- calcul d'un deuxième message d'authentification au moyen du premier numéro de séquence et comparaison du premier et du deuxième message d'authentification, l'authentification mutuelle étant réussie lorsque les deux messages d'authentification sont égaux.

Dans un exemple de réalisation, le procédé comprend, lorsque l'authentification est réussie :

- incrément du premier numéro de séquence, et
- réinitialisation de l'index.

L'invention concerne également un procédé d'authentification mutuelle entre un équipement client et un réseau de télécommunications, ledit réseau comprenant une entité de gestion de la mobilité et un serveur d'abonnés, ledit procédé, mis en oeuvre par l'entité de gestion de la mobilité comprenant :

- envoi d'une requête de données d'authentification,
- réception d'une donnée d'authentification en provenance du serveur d'abonnés, ladite donnée d'authentification comprenant un résultat attendu d'authentification fonction d'un premier numéro de séquence, et un jeton d'authentification, ledit jeton d'authentification étant fonction d'un index et d'un premier message d'authentification fonction d'un premier numéro de séquence,

- envoi du jeton d'authentification compris dans la donnée d'authentification à l'équipement utilisateur,
- réception, en provenance de l'équipement utilisateur, d'un résultat d'authentification et d'un message d'authentification, ledit message d'authentification étant fonction d'une valeur précédente d'un deuxième numéro de séquence mémorisé par l'équipement utilisateur,
- envoi du message d'authentification au serveur d'authentification lorsque le résultat d'authentification reçu de l'équipement client est égal au résultat attendu d'authentification reçu du serveur.

L'invention porte également sur un équipement utilisateur d'un réseau de télécommunications, ledit réseau comprenant une entité de gestion de la mobilité et un serveur d'abonnés, comprenant :

- des moyens de réception, agencés pour recevoir un challenge d'authentification comprenant un jeton d'authentification, le jeton d'authentification étant fonction d'un premier index et d'un premier message d'authentification calculé par le serveur d'abonnés et fonction d'un premier numéro de séquence,
- des moyens de vérification, agencés pour vérifier qu'une des conditions appartenant à un ensemble de conditions est vraie, ledit ensemble de conditions comprenant :

  - le premier numéro de séquence est identique à un deuxième numéro de séquence mémorisé dans l'équipement utilisateur, et
  - le premier numéro de séquence est identique à la valeur précédente du deuxième numéro de séquence, et le premier index est strictement supérieur à un deuxième index mémorisé dans l'équipement client,

- des moyens de calcul et d'envoi, agencés pour calculer et envoyer, lorsque l'une des conditions est vraie, un résultat d'authentification et un message d'authentification, fonction de la valeur précédente du deuxième numéro de séquence, ledit résultat d'authentification étant destiné à être vérifié pour authentifier l'équipement utilisateur.

L'invention concerne aussi un programme pour un équipement utilisateur, comprenant des instructions de code de programme destinées à commander l'exécution des étapes du procédé d'authentification mutuelle décrit précédemment et mises en oeuvre par l'équipement utilisateur, lorsque le programme est exécuté sur ledit équipement utilisateur.

L'invention concerne aussi un serveur d'abonnés dans un réseau de télécommunications, ledit réseau comprenant un équipement utilisateur et une entité de gestion de la mobilité, comprenant :

- des premiers moyens de réception, agencés pour recevoir une requête de données d'authentification,
- des moyens de calcul et d'envoi, agencés pour calculer et envoyer à l'entité de gestion de la mobilité une donnée d'authentification comprenant une résultat attendu d'authentification, un jeton d'authentification, ledit jeton d'authentification étant fonction d'un premier index et d'un premier message d'authentification fonction d'un premier numéro de séquence,
- des deuxièmes moyens de réception, agencés pour recevoir un deuxième message d'authentification, en provenance de l'équipement utilisateur et transmis par l'entité de gestion de la mobilité, fonction de la valeur précédente d'un deuxième numéro de séquence mémorisé dans l'équipement utilisateur,
- des moyens de calcul et de comparaison, agencés pour calculer un deuxième message d'authentification au moyen du premier numéro de séquence et pour comparer le premier et le deuxième message d'authentification, l' authentification mutuelle étant réussie lorsque les deux messages d'authentification sont égaux.

L'invention porte également sur un programme pour un serveur d'abonnés, comprenant des instructions de code de programme destinées à commander l'exécution des étapes du procédé d'authentification mutuelle décrit précédemment et mises en oeuvre par le serveur d'abonnés, lorsque le programme est exécuté sur ledit serveur.

L'invention porte également sur une entité de gestion de la mobilité dans un réseau de télécommunications, ledit réseau comprenant un équipement client et un serveur d'abonnés, comprenant :

- des premiers moyens d'envoi, agencés pour envoyer une requête de données d'authentification,
- des premiers moyens de réception, agencés pour recevoir une donnée d'authentification en provenance du serveur d'abonnés, ladite donnée d'authentification comprenant un résultat attendu d'authentification fonction d'un premier numéro de séquence et un jeton d'authentification, ledit jeton d'authentification étant fonction d'un index et d'un premier message d'authentification fonction d'un premier numéro de séquence,
- des deuxièmes moyens d'envoi, agencés pour envoyer le jeton d'authentification compris dans la donnée d'authentification à l'équipement utilisateur,
- des deuxièmes moyens de réception, agencés pour recevoir en provenance de l'équipement utilisateur, un résultat d'authentification et un message d'authentification, ledit message d'authentification étant fonction d'une valeur précédente d'un deuxième numéro de séquence mémorisé par l'équipement utilisateur,
- des troisièmes moyens d'envoi, agencés pour envoyer le message d'authentification au serveur d'authentification lorsque le résultat d'authentification reçu de l'équipement client est égal au résultat attendu d'authentification reçu du serveur.

L'invention porte également sur un programme pour une entité de gestion de la mobilité, comprenant des instructions de code de programme destinées à commander l'exécution des étapes du procédé d'authentification mutuelle décrit précédemment et mises en oeuvre par l'entité de gestion de la mobilité, lorsque le programme est exécuté sur ladite entité.

L'invention concerne aussi un système d'authentification dans un réseau de télécommunications, comprenant :

- au moins un équipement utilisateur tel que décrit précédemment,
- un serveur d'abonnés tel que décrit précédemment, et
- une entité de gestion de la mobilité telle que décrite précédemment.

D'autres caractéristiques et avantages de la présente invention seront mieux compris de la description et des dessins annexés parmi lesquels :

- la figure 1 présente les étapes d'un procédé d'authentification, selon un exemple de réalisation ;
- la figure 2 est une représentation schématique d'un équipement utilisateur, selon un exemple de réalisation ;
- la figure 3 est une représentation schématique d'un serveur d'abonnés, selon un exemple de réalisation ;
- la figure 4 est une représentation schématique d'une entité de gestion de la mobilité, selon un exemple de réalisation.

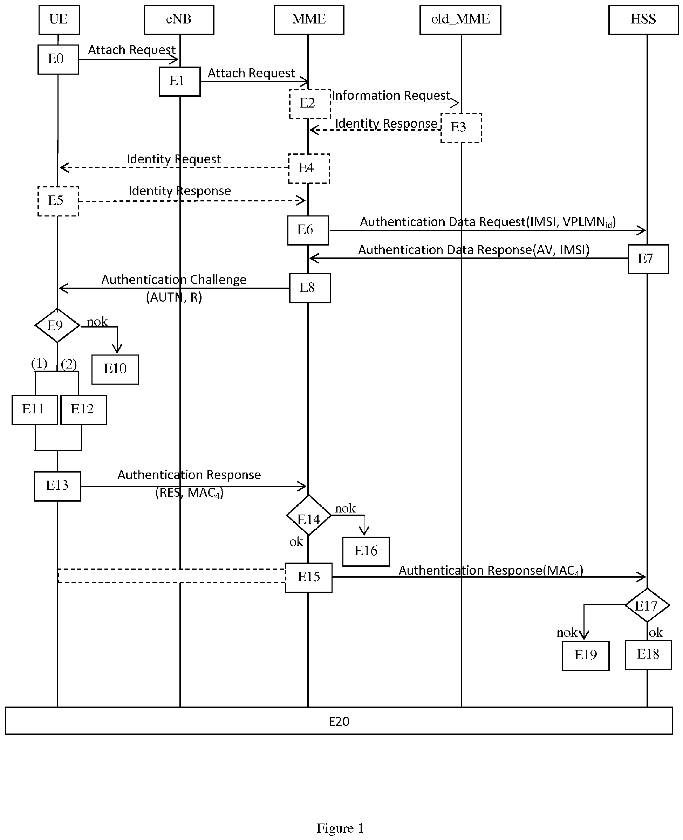

Les étapes d'un protocole d'authentification mutuelle entre un équipement utilisateur et un réseau mobile, selon un exemple de réalisation, vont maintenant être décrites en relation avec la figure 1.

Un utilisateur (non représenté sur la figure 1) est équipé d'un équipement utilisateur UE agencé pour accéder à un réseau mobile. L'équipement utilisateur UE comprend habituellement un terminal et un élément de sécurité (« Secure Element » en anglais), par exemple une carte UICC/USIM (pour « Universal Integrated Circuit Card/Universal Subscriber Identity Module »). Un tel élément de sécurité est agencé pour stocker et traiter des données sensibles, par exemple une application d'accès au réseau et des données associées (on parle de « credentials » en anglais), telles que des clés et des algorithmes cryptographiques. De telles données sont destinées à être utilisées par un protocole d'authentification mutuelle avec le réseau lors de l'accès à ce dernier. L'invention n'est pas limitée à un équipement utilisateur de ce type et dans un autre exemple de réalisation, l'équipement utilisateur UE comprend une zone logicielle sécurisée agencée pour traiter les données sensibles d'accès au réseau.

L'architecture du réseau mobile et le procédé d'authentification mutuelle sont illustrés ici dans le cadre d'un réseau de type « EPS » (pour « Evolved Packet System »). L'invention n'est cependant pas limitée à ce type de réseau et s'applique également à d'autres types de réseaux mobiles tels que par exemple le réseau « GPRS » (de l'anglais « General Packet Radio Service »), ou « UMTS » (de l'anglais « Universal Mobile Télécommunications System »).

Une station de base eNB est agencée pour gérer la transmission et la réception radio avec l'équipement utilisateur UE. L'équipement utilisateur UE est par exemple un smartphone, un téléphone portable, une tablette, etc.

Une entité de gestion de la mobilité MME est, de manière classique, responsable du contrôle dans un réseau « EPC » (« Evolved Packet Core »). Elle est en charge entre autres de la gestion de la signalisation du réseau et de l'équipement utilisateur UE, de l'établissement des connexions, de la gestion de la mobilité de l'équipement UE et de l'authentification de l'équipement utilisateur UE à partir de données obtenues d'un serveur d'abonnés HSS (ou « AuC » pour « Authentication Center », ou centre d'authentification). La gestion de la mobilité, ou handover, peut impliquer plusieurs entités de gestion de la mobilité, dont une entité précédente, notée old_MME sur la figure 1, impliquée lors de l'établissement d'une session précédente d'accès au réseau à partir de l'équipement utilisateur UE. On dit qu'une session a été établie dès lors qu'une authentification mutuelle entre l'équipement utilisateur UE et le réseau s'est déroulée avec succès.

Une passerelle de service S-GW (pour « Serving GateWay ») est agencée pour router des paquets IP entre l'équipement utilisateur UE et le réseau coeur et une passerelle de paquets P-GW (pour « Packet Data Network Gateway ») est agencée pour fournir une connectivité vers des réseaux externes. Une entité réseau d'enregistrement d'identités « EIR » (pour « Equipment Identity Register ») est agencée pour mémoriser des informations de sécurité et d'identification relatives à des terminaux mobiles. C'est grâce à cette entité qu'un opérateur peut bloquer un équipement mobile volé. Enfin, une entité de gestion PCRF (de l'anglais « Policy and Charging Rules Function ») est en charge de la gestion et du contrôle en temps réel d'une session et offre une interface de paiement et de facturation. Les fonctions de la passerelle de service S-GW, de la passerelle de paquets P-GW, de l'entité d'enregistrement EIR, de l'entité de gestion PCRF, les fonctions classiques des entités de gestion de la mobilité MME et old_MME et les interfaces entre les différentes entités sont décrites en détail dans la spécification TS 23.401. Les passerelles de service S-GW, de paquets P-GW, l'entité d'enregistrement EIR et l'entité de gestion PCRF ne sont pas représentées sur la figure 1 pour des raisons de lisibilité.

A des fins d'accès au réseau, l'équipement utilisateur UE mémorise une clé secrète maître K, appelée clé d'authentification, partagée avec le serveur d'abonnés HSS. La clé d'authentification K est destinée à être utilisée pour la génération de données d'authentification et pour la dérivation de clés telles que des clés session. De telles clés de session sont par exemple destinées à être utilisées pour le chiffrement de la voie radio, pour le contrôle d'intégrité, etc. Plus précisément la clé d'authentification K est mémorisée dans l'élément de sécurité de l'équipement utilisateur UE. L'équipement utilisateur UE mémorise et gère également un numéro de séquence $SQN_c$, associé à un état de l'élément de sécurité. Cet état évolue au fil des sessions, ce qui se traduit par l'incrément d'un pas du numéro de séquence à chaque session établie. A noter que le numéro de séquence $SQN_c$ n'est jamais réinitialisé.

Le numéro de séquence $SQN_c$ est habituellement utilisé pour éviter des attaques par rejeu lors d'une authentification d'un équipement utilisateur auprès du réseau.

Dans le cadre du procédé d'authentification mutuelle décrit ici, l'élément de sécurité de l'équipement utilisateur UE mémorise également un index $idx_c$. L'index $idx_c$ est destiné à éviter certains types d'attaques par rejeu au cours desquelles un challenge serait rejoué pour un même numéro de séquence. L'index permet en effet de distinguer deux jetons d'authentification calculés avec le même numéro de séquence. Par ailleurs, l'index permet, au niveau de l'équipement utilisateur UE de tenir compte de la perte d'une réponse d'authentification durant l'établissement d'une session précédente, et qui a provoqué une désynchronisation des numéros de séquence entre le serveur d'abonnés HSS et par l'équipement utilisateur UE. En effet, le serveur d'abonnés HSS n'incrémente pas son numéro de séquence s'il n'a pas reçu et validé la réponse d'authentification. Il permet également de resynchroniser lors d'une session suivante les deux entités sans envoyer explicitement le numéro de séquence. Cela permet de s'affranchir des demandes de resynchronisation qui font l'objet d'une commande explicite échangée entre les deux entités et qui, détectées par un attaquant, peuvent permettre de tracer un équipement utilisateur dans le réseau.

Pour chaque abonné qu'il gère, par exemple pour l'équipement utilisateur UE, le serveur d'abonnés HSS mémorise un triplé comprenant la clé d'authentification K de l'abonné, un numéro de séquence $SQN_{Op,c}$ et un index $idx_{Op,c}$. A noter qu'en cas de fonctionnement normal du réseau c'est-à-dire sans perte de message lors de l'établissement de sessions, le numéro de séquence $SQN_{Op,c}$ et l'index $idx_{Op,c}$ mémorisés en association avec l'équipement utilisateur UE et gérées par le serveur d'abonnés HSS sont identiques au numéro de séquence $SQN_c$ et à l'index $idx_c$ mémorisés et gérés par l'équipement utilisateur UE. Une différence entre les valeurs mémorisées et gérées par l'équipement utilisateur UE et celles mémorisées par le serveur d'authentification HSS est représentative de la perte d'au moins un message lors de l'établissement d'une session.

Certains échanges décrits ci-dessous sont conformes à ceux de la procédure d'enregistrement d'un terminal mobile dans un réseau telle que décrite dans la spécification TS 23.401, paragraphe 5.3.2.1. En particulier les messages échangés, lorsqu'ils ont le même nom, ainsi que leurs paramètres, sont identiques à ceux de la spécification. Ils ne sont donc pas décrits dans le détail.

Dans une étape initiale E0, le terminal UE émet une requête d'attachement au réseau Attach Request. La requête est reçue par la station de base eNB et retransmise dans une étape E1 de retransmission à l'entité de gestion de la mobilité MME.

La requête d'attachement comprend un identifiant du terminal UE. Cet identifiant est soit un identifiant temporaire de type « GUTI » (pour « Globally Unique Temporary Identifier »), s'il en possède un, soit un identifiant permanent d'abonné, ou « IMSI » (pour « International Mobile Subscriber Identity »), stocké dans l'élément de sécurité de l'équipement utilisateur UE. Si l'équipement utilisateur UE possède un identifiant temporaire, celui-ci lui a été affecté lors d'un précédent attachement de l'équipement UE au réseau par l'entité de gestion de la mobilité précédente old_MME. Dans un autre exemple de réalisation, correspondant à un réseau UMTS, l'identifiant temporaire est de type « TMSI » (« Temporary Mobile Subscriber Identity »).

Si l'équipement utilisateur UE s'est identifié avec un identifiant temporaire, alors dans une étape E2 d'envoi, l'entité de gestion de la mobilité MME envoie une requête d'identification, Identification Request, à destination de l'entité de gestion de la mobilité précédente old_MME qui a alloué l'identifiant temporaire à l'équipement client UE précédemment. L'entité de gestion de la mobilité précédente old_MME envoie, dans une étape E3 de réponse, une réponse d'identification, Identification Response, à l'entité de gestion de la mobilité MME. La réponse d'identification comprend un contexte propre à l'équipement utilisateur UE qui comprend l'identifiant unique d'abonné IMSI auquel a été associé l'identifiant temporaire, ainsi que des informations de sécurité.

Dans un cas où l'étape précédente a échoué, c'est-à-dire dans le cas où l'équipement utilisateur UE était inconnu de l'entité de gestion de la mobilité précédente old_MME, l'entité de gestion de la mobilité MME envoie à l'équipement utilisateur UE via la station de base eNB, dans une étape E4 d'envoi, une requête d'identité, Identity Request. Cette requête est destinée à obtenir de l'équipement utilisateur UE l'identifiant d'abonné unique IMSI. L'équipement utilisateur UE répond à cette requête dans une étape E5 de réponse, en envoyant à l'entité de gestion de la mobilité MME une réponse à la requête d'identité, Identity Response, qui comprend l'IMSI. Les étapes E2, E3, E4 et E5 étant optionnelles, puisqu'exécutées uniquement lorsque l'équipement utilisateur UE est inconnu de l'entité de gestion de la mobilité MME, elles apparaissent en pointillés sur la figure 1.

A ce stade, l'entité de gestion de la mobilité MME possède l'identifiant unique IMSI d'abonné associé à l'équipement utilisateur UE.

Dans une étape suivante E6 d'envoi, l'entité de gestion de la mobilité MME envoie une requête de données d'authentification, Authentication Data Request, au serveur d'abonnés HSS. La requête de données d'authentification comprend l'identifiant IMSI de l'équipement client UE, ainsi qu'un identifiant du réseau visité $VPLMN_{id}$. Le réseau visité VPLMN (de l'anglais « Visited Public Land Mobile Network ») est celui à partir duquel l'équipement utilisateur UE accède au réseau au cours de la session courante. L'entité de gestion de la mobilité MME qui reçoit la requête d'attachement envoyée par l'équipement utilisateur UE est une entité du réseau visité d'identifiant $VPLMN_{id}$.

Dans une étape E7 de génération et d'envoi de données d'authentification, le serveur d'abonnés HSS identifie dans sa base d'abonnés, à partir de l'identifiant IMSI de l'équipement utilisateur UE, la clé d'authentification K dont il partage la connaissance avec l'équipement utilisateur UE, le numéro de séquence $SQN_{Op,c}$ et la valeur d'index $idx_{Op,c}$ tels que stockés par le réseau. Le serveur d'abonnés HSS génère ensuite une donnée d'authentification AV qui comprend : un jeton d'authentification AUTN, une réponse d'authentification attendue XRES, un aléa R et une clé maîtresse de session MSK. La clé maîtresse de session MSK est destinée à être utilisée pour dériver des clés de session telles que des clés de chiffrement de la voie radio et de contrôle d'intégrité pour une session courante. Le jeton d'authentification AUTN est destiné à être utilisé pour l'authentification du réseau par l'équipement utilisateur UE. La réponse attendue XRES correspond à la valeur que doit répondre l'équipement utilisateur UE à l'entité de gestion de la mobilité MME suite à l'envoi par celle-ci du jeton d'authentification AUTN et de l'aléa R. Enfin, l'aléa R, généré par le serveur d'abonnés HSS est destiné à éviter des rejeux de données d'authentification à partir de l'équipement utilisateur d'un attaquant. La donnée d'authentification est donc de la forme : AV = (AUTN, XRES, R, MSK).

Plus précisément, les valeurs suivantes, destinées à être utilisées pour générer la donnée d'authentification AV sont calculées par le serveur d'abonnés HSS :

- Un chiffré $C_{idx}$ de l'index $idx_{Op,c}$ mémorisé par le serveur d'abonnés HSS : $C_{idx}= Enc_K(R, idx_{Op,c})$, où $Enc_K$ est un algorithme de chiffrement symétrique paramétré par la clé d'authentification K propre à l'équipement utilisateur UE. L'algorithme de chiffrement symétrique est par exemple l'algorithme « AES » (de l'anglais « Advanced Encryption Standard ») ;
- un premier message d'authentification $MAC_1 = H_1(K, R, SQN_{Op,c}, VPLMN_{id}, AMF)$, où $H_1$ est une fonction de hachage avec clé secrète, $VPLMN_{id}$ (de l'anglais « Visited Public Land Mobile Network ») un identifiant propre au réseau visité dans lequel se situe l'équipement utilisateur UE, et AMF (de l'anglais « Authentication Management Field ») un paramètre réseau inclus dans chaque donnée d'authentification et interprétable par l'élément de sécurité et l'équipement mobile ;
- $XRES = H_2(K, R, SQN_{op,c}, VPLMN_{id}, AMF)$, où $H_2$ est une fonction de hachage avec clé secrète ;
- $CK = H_3(K, R, SQN_{op,c}, VPLMN_{id}, AMF)$, où $H_3$ est une fonction de hachage avec clé secrète. La clé CK est une première clé intermédiaire permettant de calculer la clé MSK. Elle est destinée à être calculée également par l'équipement utilisateur UE ;
- $IK = H_4(K, R, SQN_{Op,c}, VPLMN_{id}, AMF)$, où $H_4$ est une fonction de hachage avec clé secrète. La clé IK est une deuxième clé intermédiaire destinée à être calculée également par l'équipement utilisateur UE ;

- MSK = KDF(CK, IK, $VPLMN_{id}$), où KDF est une fonction de dérivation de clés destinée à être utilisée pour obtenir une pluralité de clés de session, par exemple une clé de chiffrement de la voie radio, une clé de contrôle d'intégrité, etc. ; et
- AUTN = ($MAC_1$, AMF, $C_{idx}$).

En fin d'étape E7, le serveur d'abonnés HSS envoie la donnée d'authentification AV générée, ainsi que l'identifiant IMSI de l'équipement utilisateur UE à l'entité de gestion de la mobilité MME. Il incrémente également d'un pas son index $idx_{Op,c}$. Par exemple, $idx_{Op,c}c = idx_{Op,c} + 1$. L'incrément est représentatif de l'envoi par le serveur d'abonnés HSS de la donnée d'authentification AV.

Dans une étape E8 de génération de clés et d'envoi d'un challenge d'authentification, l'entité de gestion de la mobilit0é MME dérive la clé MSK afin de générer la première CK et la deuxième IK clé intermédiaire propres à l'équipement utilisateur UE. En fin d'étape E8, l'entité de gestion de la mobilité MME envoie au terminal client UE via la station de base eNB un challenge d'authentification, Authentication Challenge qui comprend le jeton d'authentification AUTN reçu du serveur d'abonnés HSS et l'aléa R. Le challenge d'authentification est noté (AUTN, R).

Dans une étape suivante E9 de calcul et de vérification, l'équipement utilisateur UE calcule un deuxième et un troisième message d'authentification $MAC_2$, $MAC_3$, à partir de l'aléa R reçu et de données qu'il a mémorisées.

Ainsi, le deuxième message d'authentification $MAC_2 = H_1(K, R, SQN_c, VPLMN_{id}, AMF)$, où $H_1$ est la fonction de hachage avec clé secrète utilisée par le serveur d'abonnés HSS lors de la génération de la donnée d'authentification , est calculé à partir du numéro de séquence courant $SQN_c$ mémorisé par l'équipement utilisateur UE.

Le troisième message d'authentification $MAC_3 = H_1(K, R, SQN_c^{-1}, VPLMN_{id}, AMF)$ est calculé à partir d'un numéro de séquence précédent, noté $SQN_c^{-1}$. Le numéro de séquence précédent $SQN_c^{-1}$ est la valeur qu'avait le numéro de séquence courant lors de la précédente session établie, c'est-à-dire associée à une authentification mutuelle réussie. Dans un exemple de réalisation, le numéro de séquence $SQN_c$ est une valeur entière discrète. Le numéro de séquence précédent $SQN_c^{-1}$ peut donc être calculé en enlevant « 1 » au numéro de séquence courant. Dans un autre exemple de réalisation, un numéro de séquence courant $SQN_c$ est obtenu en appliquant une fonction f au numéro de séquence précédent ; dans ce cas, le numéro de séquence précédent $SQN_c^{-1}$ peut être mémorisé, ou calculé au moyen d'une fonction inverse $f^{-1}$.

L'équipement utilisateur UE déchiffre également l'index $C_{idx}$ qu'il a reçu chiffré dans le jeton d'authentification AUTN. Il obtient ainsi l'index $idx_{Op,c}$ tel qu'envoyé dans la donnée d'authentification par le serveur d'abonnés HSS.

L'équipement utilisateur UE vérifie ensuite si l'une des deux conditions suivantes est vraie :

- soit que le premier message d'authentification $MAC_1$ reçu dans le jeton d'authentification AUTN au cours de l'étape E8 est identique au deuxième message d'authentification $MAC_2$ que l'équipement utilisateur UE a calculé. En d'autres termes, il vérifie que :

$$MAC_2 = H_1(K, R, SQN_c, VPLMN_{id}, AMF) = MAC_1 \qquad (1)$$

- soit que le premier message d'authentification $MAC_1$ reçu dans le jeton d'authentification AUTN au cours de l'étape E8 est égal au troisième message d'authentification $MAC_3$ que l'équipement utilisateur UE a calculé à partir du numéro de séquence précédent $SQN_c^{-1}$, et que l'index $idx_c$ qu'il stocke est inférieur à l'index $idx_{Op,c}$ qu'il a reçu chiffré et qu'il a déchiffré précédemment.

En d'autres termes, l'équipement utilisateur UE vérifie que :

$$MAC_3 = H_1(K, R, SQN_c-1, VPLMN_{id}, AMF) = MAC_1 \qquad ET \qquad idx_c < idx_{Op,c} \qquad (2)$$

Si aucune des conditions n'est vérifiée (branche « nok » sur la figure 1), indiquant que l'authentification du réseau par l'équipement utilisateur UE a échoué, le procédé s'arrête dans une étape E10 de fin.

Si la première condition est vraie (branche '(1)' sur la figure 1), c'est-à-dire si $MAC_2 = MAC_1$, les numéros de séquence $SQN_c$, $SQN_{Op,c}$, gérés respectivement par le serveur d'abonnés HSS et par l'équipement utilisateur UE sont identiques. Cela signifie que le réseau, plus précisément le serveur d'abonnés HSS et l'équipement utilisateur UE sont synchronisés. En d'autres termes il n'y a pas eu de perte de message lors de l'établissement de la session précédente, l'authentification mutuelle a été un succès. Dans ce cas, dans une étape E11 de mise à jour, l'équipement utilisateur UE réinitialise son index $idx_c$ et incrémente son numéro de séquence $SQN_c$. Par exemple, $idx_c = 0$ et $SQN_c = SQN_c + 1$.

Si la deuxième condition est vraie (branche '(2)' sur la figure 1), cela signifie qu'il y a eu une perte de message lors de l'établissement d'une session précédente, l'authentification mutuelle a échoué. Plus précisément, soit le message émis de l'équipement utilisateur UE à l'entité de gestion de la mobilité MME via la station de base eNB a été perdu, soit le message d'authentification transmis de l'entité de gestion de la mobilité MME au serveur d'abonnés HSS a été perdu. La session n'a donc pas été établie.

Dans ce cas, dans une étape E12 de mise à jour, l'équipement utilisateur UE met à jour son index $idx_c$ en lui affectant la valeur de l'index du serveur d'authentification $idx_{Op,c}$ déchiffrée au cours de l'étape E9.

Dans une étape suivante E13 de calcul et d'envoi, l'équipement utilisateur UE calcule un résultat d'authentification RES et un quatrième message d'authentification $MAC_4$ :

- RES = $H_2(K, R, SQN_c^{-1}, VPLMN_{id}, AMF)$ ; à noter que ce résultat d'authentification est calculé soit après que l'équipement utilisateur UE a incrémenté son numéro de séquence $SQN_c$ au cours de l'étape E11, soit après qu'une différence d'un pas a été détectée entre $SQN_c$ et $SQN_{Op,c}$. Dans les deux cas, le numéro de séquence $SQN_c$ géré par l'équipement utilisateur UE et utilisé pour calculer le résultat d'authentification RES est en avance d'un pas sur le numéro de séquence $SQN_{Op,c}$ géré par le serveur d'abonnés ;
- $MAC_4 = H_6(K, R, SQN_c^{-1}, VPLMN_{id}, AMF)$, où $H_6$ est une fonction de hachage avec clé secrète. A noter qu'à ce stade, l'équipement utilisateur UE a authentifié le réseau. Le quatrième message d'authentification $MAC_4$, destiné à être vérifié par le serveur d'abonnés HSS permet de confirmer l'authenticité de l'équipement utilisateur UE au serveur d'abonnés HSS indépendamment de l'entité de gestion de la mobilité. Cette confirmation conditionne l'incrément du numéro de séquence $SQN_{Op,c}$ par le serveur d'abonnés HSS.

Le résultat d'authentification RES et le quatrième message d'authentification $MAC_4$ sont envoyés dans un message de réponse d'authentification, Authentication Response à l'entité de gestion de la mobilité MME via la station de base eNB en fin d'étape E13.

Dans une étape E14 de vérification, l'entité de gestion de la mobilité MME compare le résultat d'authentification RES reçu de l'équipement utilisateur UE au résultat attendu XRES reçu du serveur d'abonnés HSS au cours de l'étape E7. Dans un premier cas (branche 'ok' sur la figure 1) où les deux valeurs sont égales, indiquant que l'authentification de l'équipement utilisateur UE auprès du réseau a réussi, dans une étape E15 d'établissement et d'envoi, l'entité de gestion de la mobilité MME établit un canal sécurisé avec l'équipement utilisateur UE dans le cadre d'échanges suivants non décrits et envoie le quatrième message d'authentification $MAC_4$ au serveur d'abonnés HSS dans un message de réponse d'authentification, Authentication Response. Dans un deuxième cas (branche 'nok' sur la figure 1) où le résultat d'authentification RES n'est pas égal au résultat d'authentification attendu XRES, indiquant que l'authentification de l'équipement utilisateur UE auprès du réseau a échoué, le procédé se termine dans une étape E16 de fin.

Dans une étape suivante E17 de vérification, le serveur d'abonnés HSS vérifie le quatrième message d'authentification $MAC_4$ qu'il a reçu au cours de l'étape E15. A cette fin, il calcule un message d'authentification de contrôle $MAC_4'$ à partir de son numéro de séquence $SQN_{Op,c}$, de la façon suivante :

$MAC_4' = H_6(K, R, SQN_{Op,c}, VPLMN_{id}, AMF)$

Il compare ensuite la valeur calculée à celle du quatrième message d'authentification $MAC_4$.

Dans un premier cas (branche 'ok' sur la figure 1) où les valeurs sont égales, l'authentification de l'équipement utilisateur UE est acceptée. Dans une étape suivante E18 de mise à jour, le serveur d'authentification incrémente son numéro de séquence $SQN_{Op,c}$ et réinitialise son index $idx_{Op,c}$. Dans cet exemple le numéro de séquence $SQN_{Op,c}$ est mis à jour avec la valeur $SQN_{Op,c} + 1$ et son index $idx_{Op,c}$ est remis à zéro.

Dans un deuxième cas (branche 'nok' sur la figure 1) où les valeurs diffèrent, indiquant que l'authentification de l'équipement utilisateur a échoué, le procédé se termine dans une étape E19 de fin. A noter que dans ce cas le numéro de séquence $SQN_{Op,c}$ et l'index $idx_{Op,c}$ ne sont pas modifiés.

La procédure d'enregistrement se poursuit ensuite, conformément aux étapes 5b à 26 de la procédure d'enregistrement décrite dans la spécification TS 23.401, faisant intervenir les passerelles de service S-GW et de paquet P-GW, l'entité d'enregistrement EIR et l'entité de gestion PCRF non représentées sur la figure 1.

L'exécution de ces étapes de la procédure d'enregistrement est représentée sur la figure par l'étape E28.

Dans un exemple de réalisation, les fonctions de hachage avec clé secrète notées $H_1$ à $H_6$ utilisées pour calculer les messages d'authentification $MAC_1$, $MAC_2$, $MAC_3$, $MAC_4$, le résultat attendu d'authentification XRES, les première et deuxième clés intermédiaires CK, IK font partie d'un ensemble de fonctions standardisées tel que Millenage, ou Tuak.

A noter que l'utilisation de l'identifiant du réseau visité $VPLMN_{id}$ pour calculer les messages d'authentification, le résultat attendu d'authentification XRES, les première et deuxième clés intermédiaires CK, IK permet d'empêcher de rejouer dans un réseau des vecteurs d'authentification générés pour un autre réseau.

Avec le procédé décrit ici, il n'y a jamais de décalage supérieur à un pas entre les numéros de séquence gérés respectivement par l'équipement utilisateur UE et le serveur d'abonnés HSS. Le numéro de séquence géré par l'équipement utilisateur UE n'est incrémenté que lorsqu'il est égal au numéro de séquence géré par le serveur d'abonnés HSS. A noter que la vérification d'une telle égalité, basée sur la vérification de messages d'authentification calculés à partir de fonctions à sens unique, se fait sans que le serveur d'abonnés HSS et l'équipement utilisateur UE n'échangent leur numéro de séquence courant. Le serveur d'abonnés HSS n'incrémente son numéro de séquence qu'après réception du quatrième message d'authentification $MAC_4$ qui permet au serveur d'abonnés HSS d'être assuré de l'authenticité de l'équipement utilisateur UE. Il n'est donc pas incrémenté en cas de perte de message entre l'équipement utilisateur UE et le serveur d'abonnés HSS. Dans ce cas, un décalage d'un pas peut se produire, le numéro de séquence de l'équipement utilisateur UE étant alors en avance d'un pas par rapport au numéro de séquence du serveur d'abonnés HSS. Ce décalage est alors traité pour une session courante en maintenant le numéro de séquence de l'équipement utilisateur UE à la valeur qu'il avait lors de la session précédente et en agissant sur l'index pour différencier une session courante de la session précédente. Ainsi, les deux équipements se resynchronisent automatiquement au cours de l'établissement réussi d'une session, sans demande explicite de resynchronisation, comme c'est le cas actuellement.

En effet, habituellement, lorsqu'une désynchronisation des numéros de séquence se produit, un mécanisme de resynchronisation est mis en oeuvre par le biais de requête de resynchronisation. Durant cette resynchronisation, l'équipement utilisateur UE envoie son numéro de séquence au serveur d'abonnés HSS afin que celui-ci se resynchronise avec l'équipement utilisateur UE. Un tel mécanisme de resynchronisation permet de tracer un équipement utilisateur en détectant l'envoi de la requête de resynchronisation. Un équipement utilisateur ne doit cependant pas être traçable, c'est-à-dire qu'il ne doit pas être possible de relier deux accès au réseau différents d'un même équipement utilisateur. Si par ailleurs, un attaquant arrive à obtenir l'identité de l'abonné détenteur de l'équipement utilisateur UE, ou un identifiant de l'équipement, impliqué dans les requêtes de resynchronisation, cela porte atteinte à la vie privée de l'utilisateur et constitue un grave problème de sécurité.

Les index $idx_c$ et $idx_{Op,c}$, gérés respectivement par l'équipement utilisateur UE et le serveur d'abonnés HSS permettent de distinguer deux jetons d'authentification successifs calculés à partir d'un même numéro de séquence. En effet, l'établissement d'une session, basée sur un premier jeton d'authentification calculé et envoyé par le serveur d'abonnés HSS peut ne pas réussir. Par exemple, un message, par exemple la réponse d'authentification de l'équipement utilisateur UE, peut se perdre ou être compromis. L'authentification échoue et dans ce cas, le numéro de séquence du serveur d'abonnés n'est pas incrémenté. Un nouveau jeton est généré lors de l'établissement de la session suivante, il est généré à partir du même numéro de séquence. L'index $idx_{Op,c}$, incrémenté par le serveur d'abonnés HSS au début de l'établissement de la session et transmis chiffré à l'équipement utilisateur UE permet ainsi à l'équipement utilisateur UE d'être assuré que le nouveau jeton d'authentification est différent de celui utilisé lors de la session précédente. Ainsi, la gestion d'un index, en plus de celle des numéros de séquence, garantit qu'il n'y a jamais plus d'un pas de différence entre des numéros de séquence gérés respectivement par l'équipement utilisateur UE, puisqu'un numéro de séquence est réutilisé dans le cas d'un échec de l'authentification. Pour autant, l'utilisation d'un même numéro de séquence lors de l'établissement de deux sessions successives donne lieu à deux jetons d'authentification distincts. Ainsi, même si une clé d'authentification K est corrompue, un attaquant ne peut pas obtenir le numéro de séquence courant d'un équipement utilisateur ou d'un serveur d'authentification. En effet, le numéro de séquence n'a plus à être transmis car il n'y a plus de désynchronisation entre les équipements. Des attaques consistant à cloner une carte ne sont plus possibles. Ainsi, des tentatives d'accès au réseau via ces cartes échouent faute de connaissance du numéro de séquence.

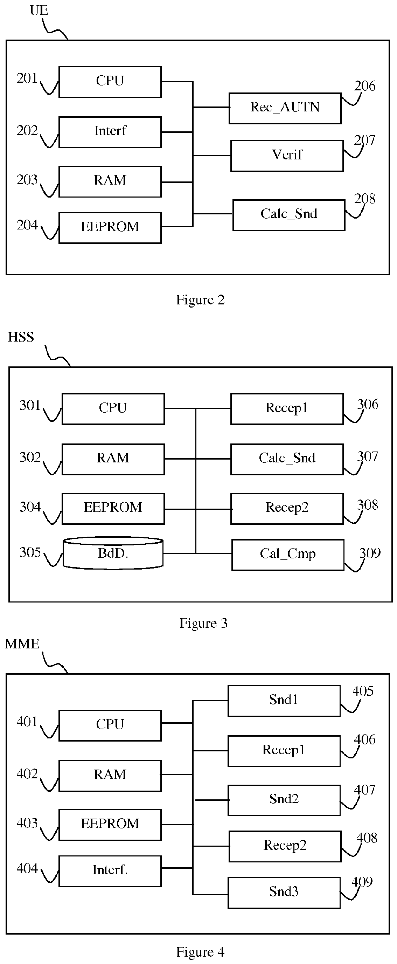

Un équipement utilisateur, selon un exemple de réalisation, va maintenant être décrit, en relation avec la figure 2.

Un équipement utilisateur UE comprend habituellement un équipement mobile équipé d'une interface radio agencée pour s'interfacer avec un réseau mobile de communication, et un élément de sécurité (« Secure Element » en anglais), par exemple une carte UICC/USIM (pour « Universal Integrated Circuit Card/Universal Subscriber Identity Module »). Un tel élément de sécurité est agencé pour stocker et traiter des données sensibles, telles que des clés et des algorithmes cryptographiques. De telles données et algorithmes sont destinés à être utilisés par le procédé d'authentification mutuelle entre l'équipement utilisateur UE et le réseau de communication, tel que décrit en relation avec la figure 1. Les interactions entre le terminal mobile et l'élément de sécurité dans l'équipement utilisateur UE étant très étroites lors d'un accès de l'équipement utilisateur UE au réseau et pour des raisons de lisibilité, on ne distingue pas dans la suite l'équipement mobile de l'élément de sécurité, qui sont ainsi regroupés dans l'équipement utilisateur UE. A noter que l'invention n'est pas limitée à un équipement utilisateur de ce type et dans un autre exemple de réalisation, l'équipement utilisateur UE comprend une zone logicielle sécurisée agencée pour traiter les données sensibles d'accès au réseau.

Dans l'exemple décrit ici, l'équipement utilisateur UE comprend :

- une unité de traitement 201, ou « CPU » pour « Central Processing Unit », agencée pour exécuter des instructions de code,
- une interface radio 202, agencée pour s'interfacer avec le réseau mobile de communication ;
- un ensemble de mémoires, dont une mémoire volatile 203 et une mémoire morte de type « ROM » (de l'anglais « Read Only Memory ») et une mémoire de stockage 204 de type mémoire flash ou « EEPROM » (pour « Electrically-Erasable Programmable Read Only Memory). La mémoire volatile 203 est agencée pour stocker des variables, stocker des résultats temporaires d'exécutions d'instructions, etc. La mémoire de stockage 204 est agencée pour mémoriser des données et des applications sensibles. En particulier, la mémoire de stockage 204 mémorise un module d'authentification agencé pour mettre en oeuvre celles des étapes du procédé d'authentification mutuelle décrit précédemment qui sont mises en oeuvre par l'équipement utilisateur UE. La mémoire de stockage 204 mémorise également une clé d'authentification K, un numéro de séquence $SQN_c$ et un index $idx_c$.

L'équipement utilisateur UE comprend également :

- un module 206 de réception, agencé pour recevoir un challenge d'authentification comprenant un jeton d'authentification AUTN, le jeton d'authentification étant fonction d'un premier index $idx_{Op,c}$ et d'un premier message d'authentification $MAC_1$ calculé par le serveur d'abonnés HSS (non représenté sur la figure 2) et fonction d'un premier numéro de séquence $SQN_{Op,c}$. Le module de réception 206 est agencé pour mettre en oeuvre l'étape E8 du procédé d'authentification mutuelle tel que décrit précédemment ;
- un module 207 de vérification, agencé pour vérifier qu'une des conditions appartenant à un ensemble de conditions est vraie, ledit ensemble de conditions comprenant :

  - un premier numéro de séquence $SQN_{Op,c}$ propre au serveur d'abonnés HSS est identique à un deuxième numéro de séquence $SQN_c$ mémorisé dans l'équipement utilisateur, et
  - le premier numéro de séquence est identique à la valeur précédente $SQN_c^{-1}$ du deuxième numéro de séquence et le premier index est strictement supérieur à un deuxième index $idx_c$ mémorisée dans l'équipement utilisateur UE.

Le module 207 de vérification est agencé pour mettre en oeuvre l'étape E9 du procédé d'authentification mutuelle tel que décrit précédemment ;

- un module 208 de calcul et d'envoi, agencé pour calculer et envoyer, lorsque l'une des conditions est vérifiée, d'un résultat d'authentification RES et un message d'authentification $MAC_4$, fonction de la valeur précédente du deuxième numéro de séquence, ledit résultat d'authentification étant destiné à être vérifié pour authentifier l'équipement utilisateur UE. Le module 208 de calcul et d'envoi est agencé pour mettre en oeuvre l'étape E13 du procédé d'authentification mutuelle tel que décrit précédemment.

Les modules décrit ci-dessus et notamment le module de réception 206, le module 207 de vérification et le module 208 de calcul est d'envoi sont de préférence des modules logiciels comprenant des instructions de code logicielles pour faire exécuter celles des étapes du procédé d'authentification mutuelle décrit en relation avec la figure 1 et qui sont mises en oeuvre par l'équipement utilisateur UE.

L'invention concerne donc aussi :

- un programme d'ordinateur comportant des instructions pour la mise en oeuvre du procédé d'authentification mutuelle tel que décrit précédemment, lorsque ce programme est exécuté par un processeur ;
- un support d'enregistrement lisible par un lecteur sur lequel est enregistré le programme d'ordinateur décrit ci-dessus.

Les modules logiciels peuvent être stockés dans, ou transmis par un support de données. Celui-ci peut être un support matériel de stockage, ou bien un support de transmission tel qu'un signal ou un réseau de communications.

Un serveur d'abonnés, selon un exemple de réalisation, va maintenant être décrit en relation avec la figure 3.

Un serveur d'abonnés HSS est un serveur informatique agencé pour gérer des données d'accès d'abonnés à un réseau de communication. Il est également agencé pour authentifier un équipement utilisateur lors de l'accès de celui-ci au réseau et pour s'authentifier auprès de cet équipement.

Le serveur d'abonnés HSS comprend :

- une unité de traitement ou processeur 301, destinée à charger des instructions en mémoire, à les exécuter, à effectuer des opérations ;
- un ensemble de mémoires, dont une mémoire volatile 302, ou RAM, utilisée pour exécuter des instructions de code, stocker des variables, etc., une mémoire morte et une mémoire de stockage 304 de type EEPROM. En particulier, la mémoire de stockage 304 est agencée pour mémoriser un module logiciel comprenant des instructions de code pour mettre en oeuvre celles des étapes du procédé d'authentification mutuelle entre un équipement utilisateur et un réseau de communication tel que décrit précédemment qui sont exécutées par le serveur d'abonnés HSS. Le serveur d'abonnés HSS est agencé pour accéder à une base d'abonnés 305 qui comprend des données d'accès au réseau propre à chacun des abonnés au réseau. En particulier, pour chacun des abonnés du réseau, le serveur d'abonnés HSS mémorise un triplé comprenant une clé d'authentification K de l'abonné, un numéro de séquence $SQN_{Op,c}$ et un index $idx_{Op,c}$.

Le serveur d'abonnés HSS comprend également :

- un premier module de réception 306, agencé pour recevoir une requête de données d'authentification. Le premier module de réception 306 est agencé pour mettre en oeuvre l'étape E6 du procédé d'authentification mutuelle décrit en relation avec la figure 1 ;
- un module 307 de calcul et d'envoi, agencé pour calculer et à l'entité de gestion de la mobilité MME une donnée d'authentification AV comprenant une résultat attendu d'authentification XRES, un jeton d'authentification AUTN, ledit jeton d'authentification étant fonction d'un premier index $idx_{Op,c}$ et d'un premier message d'authentification $MAC_1$, fonction d'un premier numéro de séquence $SQN_{Op,c}$. Le module 307 de calcul est d'envoi est agencé pour mettre en oeuvre l'étape E7 du procédé d'authentification décrit précédemment ;
- un deuxième module de réception 308, agencé pour recevoir un deuxième message d'authentification $MAC_4$, en provenance de l'équipement utilisateur et transmis par l'entité de gestion de la mobilité, fonction de la valeur précédente $SQN_c^{-1}$ d'un deuxième numéro de séquence mémorisé dans l'équipement utilisateur. Le deuxième module de réception 308 est agencé pour mettre en oeuvre l'étape E15 du procédé d'authentification décrit précédemment ;
- un module 309 de calcul et de comparaison, agencé pour calculer un deuxième message d'authentification $MAC_4'$ au moyen du premier numéro de séquence $SQN_{Op,c}$ et pour comparer le premier et le deuxième message d'authentification, l'authentification mutuelle étant réussie lorsque les deux messages d'authentification sont égaux. Le module 309 de calcul et de comparaison est agencé pour mettre en oeuvre l'étape E17 du procédé d'authentification décrit précédemment.

Le premier module de réception 306, le module 307 de calcul et d'envoi, le deuxième module de réception 308 et le module 309 de calcul et de comparaison sont de préférence des modules logiciels comprenant des instructions logicielles pour mettre en oeuvre les étapes du procédé d'authentification mutuelle entre un équipement utilisateur et un réseau de communication qui sont exécutées par le serveur d'abonnés HSS.

L'invention concerne donc aussi :

- un programme d'ordinateur comportant des instructions pour la mise en oeuvre du procédé d'authentification mutuelle entre un équipement utilisateur et un réseau tel que décrit précédemment lorsque ce programme est exécuté par un processeur du serveur d'abonnés HSS, et

- un support d'enregistrement lisible sur lequel est enregistré le programme d'ordinateur décrit ci-dessus.

Une entité de gestion de la mobilité, selon un exemple de réalisation, va maintenant être décrite en relation avec la figure 4.

Une entité de gestion de la mobilité MME, est une entité réseau en charge du contrôle dans un réseau de communication mobile. Elle est responsable de l'enregistrement des équipements utilisateur, de leur authentification et de leur joignabilité.

L'entité de gestion de la mobilité MME est un serveur informatique comprenant :

- une unité de traitement ou processeur 401, ou CPU, destinée à charger des instructions en mémoire, à les exécuter, à effectuer des opérations ;
- un ensemble de mémoires, dont une mémoire volatile 402, ou RAM utilisée pour exécuter des instructions de code, stocker des variables, etc., et une mémoire de stockage 403 de type EEPROM. En particulier, la mémoire de stockage 403 est agencée pour mémoriser un module logiciel comprenant des instructions de code pour mettre en oeuvre celles des étapes du procédé authentification mutuelle entre un équipement utilisateur et un réseau de communication tel que décrit précédemment qui sont exécutées par l'entité de gestion de la mobilité MME.

L'entité de gestion de la mobilité MME comprend également :

- un ensemble 404 d'interfaces, agencées pour communiquer avec des entités du réseau, telles que l'équipement utilisateur UE via la station de base eNB, d'autres entités de gestion de la mobilité, le serveur d'abonnés HSS ;
- un premier module d'envoi 405, agencé pour envoyer une requête de données d'authentification au serveur d'abonnés HSS. Le premier module d'envoi 405 est agencé pour mettre en oeuvre l'étape E6 du procédé d'authentification mutuelle entre l'équipement utilisateur et le réseau tel que décrit précédemment ;
- un premier module de réception 406, agencé pour recevoir une donnée d'authentification en provenance du serveur d'abonnés HSS, ladite donnée d'authentification comprenant un résultat attendu d'authentification XRES fonction d'un premier numéro de séquence $SQN_{Op,c}$ et un jeton d'authentification AUTN, ledit jeton d'authentification étant fonction d'un index $idx_{Op,c}$ et d'un premier message d'authentification $MAC_1$ fonction d'un premier numéro de séquence $SQN_{Op,c}$. Le premier module de réception est agencé pour mettre en oeuvre l'étape E7 du procédé d'authentification mutuelle tel que décrit précédemment ;

- un deuxième module d'envoi 407, des deuxièmes moyens d'envoi, agencés pour envoyer le jeton d'authentification compris dans la donnée d'authentification à l'équipement utilisateur. Le deuxième module d'envoi 407 est agencé pour mettre en oeuvre l'étape E8 du procédé d'authentification mutuelle tel que décrit précédemment ;
- un deuxième module de réception 408, agencé pour recevoir en provenance de l'équipement utilisateur, un résultat d'authentification RES et un message d'authentification $MAC_4$, ledit message d'authentification étant fonction d'une valeur précédente d'un deuxième numéro de séquence $SQN_c^{-1}$ mémorisé par l'équipement utilisateur. Le deuxième module de réception 408 est agencé pour mettre en oeuvre l'étape E13 du procédé d'authentification mutuelle tel que décrit précédemment ;
- un troisième module d'envoi 409, agencé pour envoyer le message d'authentification au serveur d'authentification lorsque le résultat d'authentification reçu de l'équipement client est égal au résultat attendu d'authentification reçu du serveur. Le troisième module d'envoi 409 est agencé pour mettre en oeuvre l'étape E15 du procédé d'authentification mutuelle tel que décrit précédemment.

L'ensemble d'interfaces 404, le premier module d'envoi 405, le premier module de réception 406, le deuxième module d'envoi 407, le deuxième module de réception 408 et le troisième module d'envoi 409 sont de préférence des modules logiciels comprenant des instructions logicielles pour mettre en oeuvre les étapes du procédé d'authentification mutuelle entre un équipement utilisateur et un réseau de communication qui sont exécutées par l'entité de gestion de la mobilité MME.

L'invention concerne donc aussi :

- un programme d'ordinateur comportant des instructions pour la mise en oeuvre du procédé d'enregistrement d'un terminal mobile tel que décrit précédemment lorsque ce programme est exécuté par un processeur de l'entité de gestion de la mobilité MME, et
- un support d'enregistrement lisible sur lequel est enregistré le programme d'ordinateur décrit ci-dessus.

L'invention porte également sur un système d'authentification mutuelle dans un réseau de communication. Il comprend au moins un équipement utilisateur UE tel que décrit en relation avec la figure 2, un serveur d'abonnés HSS tel que décrit en relation avec la figure 3 et une entité de gestion de la mobilité telle que décrite en relation avec la figure 4. Un tel système est agencé pour mettre en oeuvre les étapes du procédé d'authentification mutuelle tel que décrit précédemment.

**Revendications**

1. Procédé d'authentification mutuelle entre un équipement utilisateur (UE) et un réseau de communication, ledit réseau comprenant une entité de gestion de la mobilité (MME) et un serveur d'abonnés (HSS), ledit procédé comprenant :

   - réception (E8) par l'équipement utilisateur d'un challenge d'authentification comprenant un jeton d'authentification (AUTN), fonction d'un premier index $(idx_{Op,c})$ et d'un premier message d'authentification $(MAC_1)$ calculé par le serveur d'abonnés et fonction d'un premier numéro de séquence $(SQN_{Op,c})$,

   - calcul (E9) par l'équipement utilisateur d'un deuxième message d'authentification $(MAC_2)$ à partir d'un numéro de séquence courant $(SQN_c)$ dit « deuxième numéro de séquence », mémorisé par l'équipement utilisateur (UE), et d'un troisième message d'authentification $(MAC_3)$ à partir d'un numéro de séquence précédent $(SQN_c^{-1})$ correspondant à la valeur qu'avait le numéro de séquence courant lors d'une précédente session associée à une authentification mutuelle réussie,

   - vérification (E9) par l'équipement utilisateur qu'une des conditions appartenant à un ensemble de conditions est vraie, ledit ensemble de conditions comprenant :

     - le premier message d'authentification $(MAC_1)$ reçu du serveur est égal au deuxième message d'authentification calculé par l'équipement utilisateur indiquant que le premier numéro de séquence est identique au deuxième numéro de séquence ($SQN_c$) mémorisé dans l'équipement utilisateur, et
- le premier message d'authentification ($MAC_1$) reçu du serveur est égal au troisième message d'authentification ($MAC_3$) calculé par l'équipement utilisateur indiquant que le premier numéro de séquence est identique au numéro de séquence précédent ($SQN_c^{-1}$) et le premier index est strictement supérieur à un deuxième index ($idx_c$) mémorisé dans l'équipement utilisateur,

- calcul et envoi (E13) par l'équipement utilisateur, lorsque l'une des conditions est vraie, d'un résultat d'authentification (RES) et d'un quatrième message d'authentification ($MAC_4$), fonction du numéro de séquence précédent, ledit résultat d'authentification étant destiné à être vérifié pour authentifier l'équipement utilisateur.

**2.** Procédé selon la revendication 1, comprenant, lorsque le premier numéro de séquence ($SQN_{Op,c}$) est identique au deuxième numéro de séquence ($SQN_c$) :

- incrément par l'équipement utilisateur du deuxième numéro de séquence, et
- réinitialisation par l'équipement utilisateur du deuxième index.

**3.** Procédé selon la revendication 1, comprenant, lorsque le premier numéro de séquence est identique au numéro de séquence précédent et que le premier index est strictement supérieur à un deuxième index mémorisé dans l'équipement client :

- mémorisation par l'équipement utilisateur dans le deuxième index ($idx_c$) du premier index ($idx_{Op,c}$).

**4.** Procédé d'authentification selon la revendication 1, comprenant en outre :

- réception (E6) par le serveur d'abonnés d'une requête de données d'authentification,
- calcul (E7) et envoi par le serveur d'abonnés à l'entité de gestion de la mobilité d'une donnée d'authentification (AV) comprenant un résultat attendu d'authentification (XRES) et le jeton d'authentification (AUTN),,
- réception (E15) par le serveur d'abonnés du quatrième message d'authentification ($MAC_4$), fonction de la valeur précédente ($SQN_{c-1}$) du deuxième numéro de séquence mémorisé dans l'équipement utilisateur,
- calcul par le serveur d'abonnés d'un cinquième message d'authentification ($MAC_4'$) au moyen du premier numéro de séquence ($SQN_{Op,c}$) et comparaison par le serveur d'abonnés du quatrième et du cinquième message d'authentification, l'authentification mutuelle étant réussie lorsque les deux messages d'authentification sont égaux.

**5.** Procédé selon la revendication 4, comprenant, lorsque l'authentification est réussie :

- incrément par le serveur d'abonnés du premier numéro de séquence, et
- réinitialisation par le serveur d'abonnés de l'index.

**6.** Procédé selon la revendication 1, ledit procédé comprenant :

- envoi (E6) par l'entité de gestion de la mobilité d'une requête de données d'authentification,
- réception (E8) par l'entité de gestion de la mobilité d'une donnée d'authentification (AV) en provenance du serveur d'abonnés, ladite donnée d'authentification comprenant un résultat attendu d'authentification (XRES) fonction d'un premier numéro de séquence ($SQN_{Op,c}$), et du jeton d'authentification (AUTN), ,
- envoi (E8) par l'entité de gestion de la mobilité du jeton d'authentification compris dans la donnée d'authentification à l'équipement utilisateur,
- réception par l'entité de gestion de la mobilité, en provenance de l'équipement utilisateur, du résultat d'authentification (RES) et du quatrième message d'authentification ($MAC_4$),
- envoi (E15) par l'entité de gestion de la mobilité du message d'authentification au serveur d'abonnés lorsque le résultat d'authentification reçu de l'équipement client est égal au résultat attendu d'authentification reçu du serveur.

**7.** Equipement utilisateur (UE) d'un réseau de télécommunications, ledit réseau comprenant une entité de gestion de la mobilité (MME) et un serveur d'abonnés (HSS), comprenant :

- des moyens de réception (206), agencés pour recevoir un challenge d'authentification comprenant un jeton d'authentification (AUTN), le jeton d'authentification étant fonction d'un premier index ($idx_{Op,c}$) et d'un premier message d'authentification ($MAC_1$) calculé par le serveur d'abonnés et fonction d'un premier numéro de séquence ($SQN_{Op,c}$),

- des moyens de calcul, agencés pour calculer un deuxième message d'authentification ($MAC_2$) à partir d'un numéro de séquence courant ($SQN_c$) dit « deuxième numéro de séquence », mémorisé par l'équipement utilisateur (UE), et un troisième message d'authentification ($MAC_3$) à partir d'un numéro de séquence précédent ($SQN_c^{-1}$) correspondant à la valeur qu'avait le numéro de séquence courant lors d'une précédente session associée à une authentification mutuelle réussie,

- des moyens de vérification (207), agencés pour vérifier qu'une des conditions appartenant à un ensemble de conditions est vraie, ledit ensemble de conditions comprenant :

- le premier message d'authentification ($MAC_1$) reçu du serveur est égal au deuxième message d'authentification calculé par l'équipement utilisateur indiquant que le premier numéro de séquence est identique au deuxième numéro de séquence ($SQN_c$) mémorisé dans l'équipement utilisateur, et
- le premier message d'authentification ($MAC_1$) reçu du serveur est égal au troisième message d'authentification ($MAC_3$) calculé par l'équipement utilisateur indiquant que le premier numéro de séquence est identique au numéro de séquence précédent ($SQN_c^{-1}$), et le premier index est strictement supérieur à un deuxième index ($idx_c$) mémorisé dans l'équipement utilisateur,

- des moyens de calcul et d'envoi (208), agencés pour calculer et envoyer, lorsque l'une des conditions est vraie, un résultat d'authentification (RES) et un quatrième message d'authentification ($MAC_4$), fonction du numéro de séquence précédent, ledit résultat d'authentification étant destiné à être vérifié pour authentifier l'équipement utilisateur.

8. Programme pour un équipement utilisateur, comprenant des instructions de code de programme destinées à commander l'exécution des étapes du procédé d'authentification mutuelle selon l'une quelconque des revendications 1 à 3 mises en oeuvre par l'équipement utilisateur,
lorsque le programme est exécuté sur ledit équipement utilisateur.

9. Système d'authentification dans un réseau de télécommunications, ledit système comprenant un équipement utilisateur selon la revendication 7, une entité de gestion de la mobilité (MME) et un serveur d'abonnés (HSS), ledit serveur comprenant :

- des premiers moyens de réception (306), agencés pour recevoir une requête de données d'authentification,

- des moyens (307) de calcul et d'envoi, agencés pour calculer et envoyer à l'entité de gestion de la mobilité une donnée d'authentification (AV) comprenant un résultat attendu d'authentification (XRES), un jeton d'authentification (AUTN), ledit jeton d'authentification étant fonction d'un premier index ($idx_{Op,c}$) et d'un premier message d'authentification ($MAC_1$) fonction d'un premier numéro de séquence ($SQN_{Op,c}$),
- des deuxièmes moyens de réception (308), agencés pour recevoir un deuxième message d'authentification ($MAC_4$), en provenance de l'équipement utilisateur et transmis par l'entité de gestion de la mobilité, fonction de la valeur précédente ($SQN_c^{-1}$) d'un deuxième numéro de séquence mémorisé dans l'équipement utilisateur,
- des moyens (309) de calcul et de comparaison, agencés pour calculer un troisième message d'authentification ($MAC_4'$) au moyen du premier numéro de séquence ($SQN_{Op,c}$) et pour comparer le deuxième et le troisième message d'authentification, l'authentification mutuelle étant réussie lorsque les deux messages d'authentification sont égaux.

10. Système d'authentification selon la revendication 9, dans lequel l'entité de gestion de la mobilité comprend :

- des premiers moyens d'envoi (405), agencés pour envoyer une requête de données d' authentification,

- des premiers moyens de réception (406), agencés pour recevoir une donnée d'authentification (AV) en provenance du serveur d'abonnés, ladite donnée d'authentification comprenant un résultat attendu d'authentification (XRES) fonction d'un premier numéro de séquence ($SQN_{Op,c}$) mémorisé dans le serveur d'abonnés et un jeton d'authentification (AUTN), ledit jeton d'authentification étant fonction d'un index

(idx$_{Op,c}$) et d'un premier message d'authentification (MAC$_1$) fonction du premier numéro de séquence (SQN$_{Op,c}$),

- des deuxièmes moyens d'envoi (407), agencés pour envoyer le jeton d'authentification compris dans la donnée d'authentification à l'équipement utilisateur,
- des deuxièmes moyens de réception (408), agencés pour recevoir en provenance de l'équipement utilisateur, un résultat d'authentification (RES) et un deuxième message d'authentification (MAC$_4$), ledit deuxième message d'authentification étant fonction d'une valeur précédente d'un deuxième numéro de séquence (SQN$_c^{-1}$) mémorisé dans l'équipement utilisateur,
- des troisièmes moyens d'envoi (409), agencés pour envoyer le deuxième message d'authentification au serveur d'authentification lorsque le résultat d'authentification reçu de l'équipement client est égal au résultat attendu d'authentification reçu du serveur.

**Patentansprüche**

1. Verfahren zur gegenseitigen Authentifizierung zwischen einem Benutzergerät (UE) und einem Kommunikationsnetz, wobei das Netz eine Mobilitätsmanagemententität (MME) und einen Teilnehmerserver (HSS) enthält, wobei das Verfahren enthält:

   - Empfang (E8) einer Authentifizierungschallenge durch das Benutzergerät, die ein Authentifizierungstoken (AUTN) enthält, abhängig von einem ersten Index (idx$_{Op,c}$) und von einer ersten Authentifizierungsnachricht (MAC$_1$), die vom Teilnehmerserver berechnet wird und von einer ersten Sequenznummer (SQN$_{Op,c}$) abhängt,
   - Berechnung (E9) einer zweiten Authentifizierungsnachricht (MAC$_2$) durch das Benutzergerät ausgehend von einer vom Benutzergerät (UE) gespeicherten aktuellen Sequenznummer (SQN$_c$) "zweite Sequenznummer" genannt, und einer dritten Authentifizierungsnachricht (MAC$_3$) ausgehend von einer vorhergehenden Sequenznummer (SQN$_c^{-1}$) entsprechend dem Wert, den die aktuelle Sequenznummer während einer vorhergehenden Sitzung hatte, die einer erfolgreichen gegenseitigen Authentifizierung zugeordnet ist,
   - Überprüfung (E9) durch das Benutzergerät, dass eine der zu einer Einheit von Bedingungen gehörenden Bedingungen wahr ist, wobei die Einheit von Bedingungen enthält:

      - die vom Server empfangene erste Authentifizierungsnachricht (MAC$_1$) ist gleich der vom Benutzergerät berechneten zweiten Authentifizierungsnachricht, die anzeigt, dass die erste Sequenznummer gleich der im Benutzergerät gespeicherten zweiten Sequenznummer (SQN$_c$) ist, und
      - die vom Server empfangene erste Authentifizierungsnachricht (MAC$_1$) ist gleich der vom Benutzergerät berechneten dritten Authentifizierungsnachricht (MAC$_3$), die anzeigt, dass die erste Sequenznummer gleich der vorhergehenden Sequenznummer (SON$_c^{-1}$) ist, und der erste Index ist strikt höher als ein im Benutzergerät gespeicherter zweiter Index (idx$_c$),

   - Berechnen und Senden (E13) durch das Benutzergerät, wenn eine der Bedingungen wahr ist, eines Authentifizierungsergebnisses (RES) und einer vierten Authentifizierungsnachricht (MAC$_4$), abhängig von der vorhergehenden Sequenznummer, wobei das Authentifizierungsergebnis dazu bestimmt ist, überprüft zu werden, um das Benutzergerät zu authentifizieren.

2. Verfahren nach Anspruch 1, das, wenn die erste Sequenznummer (SQN$_{Op,c}$) gleich der zweiten Sequenznummer (SQN$_c$) ist, enthält:

   - Inkrement der zweiten Sequenznummer durch das Benutzergerät, und
   - Rücksetzung des zweiten Index durch das Benutzergerät.

3. Verfahren nach Anspruch 1, das, wenn die erste Sequenznummer gleich der vorhergehenden Sequenznummer und der erste Index strikt größer ist als ein im Client-Gerät gespeicherter zweiter Index, enthält:

   - Speichern des ersten Index (idx$_{Op,c}$) im zweiten Index (idx$_c$) durch das Benutzergerät.

4. Authentifizierungsverfahren nach Anspruch 1, das außerdem enthält:

   - Empfang (E6) einer Anforderung von Authentifizierungsdaten durch den Teilnehmerserver,

- Berechnen (E7) und Senden durch den Teilnehmerserver an die Mobilitätsmanagemententität eines Authentifizierungsdatenwerts (AV), der ein erwartetes Authentifizierungsergebnis (XRES) und das Authentifizierungstoken (AUTN) enthält,
- Empfang (EI5) der vierten Authentifizierungsnachricht ($MAC_4$), abhängig vom vorhergehenden Wert ($SQN_c{}^{-1}$) der im Benutzergerät gespeicherten zweiten Sequenznummer, durch den Teilnehmerserver,
- Berechnen einer fünften Authentifizierungsnachricht ($MAC_4{}'$) durch den Teilnehmerserver mittels der ersten Sequenznummer ($SQN_{Op,c}$) und Vergleich der vierten und der fünften Authentifizierungsnachricht durch den Teilnehmerserver, wobei die gegenseitige Authentifizierung erfolgreich ist, wenn die zwei Authentifizierungsnachrichten gleich sind.

5. Verfahren nach Anspruch 4, das enthält, wenn die Authentifizierung erfolgreich ist:

   - Inkrement der ersten Sequenznummer durch den Teilnehmerserver, und
   - Rücksetzung des Index durch den Teilnehmerserver.

6. Verfahren nach Anspruch 1, wobei das Verfahren enthält:

   - Senden (E6) einer Anforderung von Authentifizierungsdaten durch die Mobilitätsmanagemententität,
   - Empfang (E8) eines Authentifizierungsdatenwerts (AV) vom Teilnehmerserver durch die Mobilitätsmanagemententität, wobei der Authentifizierungsdatenwert ein erwartetes Authentifizierungsergebnis (XRES) abhängig von einer ersten Sequenznummer ($SQN_{Op,c}$) und vom Authentifizierungstoken (AUTN) enthält,
   - Senden (E8) des im Authentifizierungsdatenwert enthaltenen Authentifizierungstokens durch die Mobilitätsmanagemententität an das Benutzergerät,
   - Empfang durch die Mobilitätsmanagemententität des Authentifizierungsergebnisses (RES) und der vierten Authentifizierungsnachricht ($MAC_4$) vom Benutzergerät,
   - Senden (EI5) der Authentifizierungsnachricht durch die Mobilitätsmanagemententität an den Teilnehmerserver, wenn das von dem Client-Gerät empfangene Authentifizierungsergebnis gleich dem vom Server empfangenen erwarteten Authentifizierungsergebnis ist.

7. Benutzergerät (UE) eines Telekommunikationsnetzes, wobei das Netz eine Mobilitätsmanagemententität (MME) und einen Teilnehmerserver (HSS) enthält, das enthält:

   - Empfangseinrichtungen (206), die eingerichtet sind, um eine Authentifizierungschallenge zu empfangen, die ein Authentifizierungstoken (AUTN) enthält, wobei das Authentifizierungstoken von einem ersten Index ($idx_{Op,c}$) und von einer ersten Authentifizierungsnachricht ($MAC_1$) abhängt, die vom Teilnehmerserver berechnet wird und von einer ersten Sequenznummer ($SQN_{Op,c}$) abhängt,
   - Recheneinrichtungen, die eingerichtet sind, um eine zweite Authentifizierungsnachricht ($MAC_2$) ausgehend von einer vom Benutzergerät (UE) gespeicherten aktuellen Sequenznummer ($SQN_c$), "zweite Sequenznummer" genannt, und eine dritte Authentifizierungsnachricht ($MAC_3$) ausgehend von einer vorhergehenden Sequenznummer ($SQN_c{}^{-1}$) zu berechnen, die dem Wert entspricht, den die aktuelle Sequenznummer während einer vorhergehenden Sitzung hatte, die einer erfolgreichen gegenseitigen Authentifizierung zugeordnet ist,
   - Überprüfungseinrichtungen (207), die eingerichtet sind, um zu überprüfen, dass eine der zu einer Einheit von Bedingungen gehörenden Bedingungen wahr ist, wobei die Einheit von Bedingungen enthält:

      - die vom Server empfangene erste Authentifizierungsnachricht ($MAC_1$) ist gleich der vom Benutzergerät berechneten zweiten Authentifizierungsnachricht, die anzeigt, dass die erste Sequenznummer gleich der im Benutzergerät gespeicherten zweiten Sequenznummer ($SQN_c$) ist, und
      - die vom Server empfangene erste Authentifizierungsnachricht ($MAC_1$) ist gleich der vom Benutzergerät berechneten dritten Authentifizierungsnachricht ($MAC_3$), die anzeigt, dass die erste Sequenznummer gleich der vorhergehenden Sequenznummer ($SON_c{}^{-1}$) ist, und der erste Index ist strikt größer als ein im Benutzergerät gespeicherter zweiter Index ($idx_c$),

   - Rechen- und Sendeeinrichtungen (208), die eingerichtet sind, um, wenn eine der Bedingungen wahr ist, ein Authentifizierungsergebnis (RES) und eine vierte Authentifizierungsnachricht ($MAC_4$), abhängig von der vorhergehenden Sequenznummer, zu berechnen und zu senden, wobei das Authentifizierungsergebnis dazu bestimmt ist, überprüft zu werden, um das Benutzergerät zu authentifizieren.

8. Programm für ein Benutzergerät, das Programmcodeanweisungen enthält, die dazu bestimmt sind, die Ausführung der vom Benutzergerät durchgeführten Schritte des Verfahrens gegenseitiger Authentifizierung nach einem der Ansprüche 1 bis 3 zu steuern, wenn das Programm auf dem Benutzergerät ausgeführt wird.

9. Authentifizierungssystem in einem Telekommunikationsnetz, wobei das System ein Benutzergerät nach Anspruch 7, eine Mobilitätsmanagemententität (MME) und einen Teilnehmerserver (HSS) enthält, wobei der Server enthält:

- erste Empfangseinrichtungen (306), die eingerichtet sind, um eine Anforderung von Authentifizierungsdaten zu empfangen,
- Rechen- und Sendeeinrichtungen (307), die eingerichtet sind, um einen Authentifizierungsdatenwert (AV) zu berechnen und an die Mobilitätsmanagemententität zu senden, der ein erwartetes Authentifizierungsergebnis (XRES), ein Authentifizierungstoken (AUTN) enthält, wobei das Authentifizierungstoken von einem ersten Index ($idx_{Op,c}$) und von einer ersten Authentifizierungsnachricht ($MAC_1$) abhängig von einer ersten Sequenznummer ($SQN_{Op,c}$) abhängt,
- zweite Empfangseinrichtungen (308), die eingerichtet sind, um eine zweite Authentifizierungsnachricht ($MAC_4$) abhängig vom vorhergehenden Wert ($SQN_c^{-1}$) einer im Benutzergerät gespeicherten zweiten Sequenznummer vom Benutzergerät kommend und von der Mobilitätsmanagemententität übertragen zu empfangen,
- Rechen- und Vergleichseinrichtungen (309), die eingerichtet sind, um eine dritte Authentifizierungsnachricht ($MAC_4$') mittels der ersten Sequenznummer ($SQNO_{p,c}$) zu berechnen und um die zweite und die dritte Authentifizierungsnachricht zu vergleichen, wobei die gegenseitige Authentifizierung erfolgreich ist, wenn die zwei Authentifizierungsnachrichten gleich sind.

10. Authentifizierungssystem nach Anspruch 9, wobei die Mobilitätsmanagemententität enthält:

- erste Sendeeinrichtungen (405), die eingerichtet sind, um eine Anforderung von Authentifizierungsdaten zu senden,
- erste Empfangseinrichtungen (406), die eingerichtet sind, um einen Authentifizierungsdatenwert (AV) vom Teilnehmerserver zu empfangen, wobei der Authentifizierungsdatenwert ein erwartetes Authentifizierungsergebnis (XRES) abhängig von einer im Teilnehmerserver gespeicherten ersten Sequenznummer ($SQN_{Op,c}$) und ein Authentifizierungstoken (AUTN) enthält, wobei das Authentifizierungstoken von einem Index ($idx_{Op,c}$) und von einer ersten Authentifizierungsnachricht ($MAC_1$) abhängig von der ersten Sequenznummer ($SQN_{Op,c}$) abhängt,
- zweite Sendeeinrichtungen (407), die eingerichtet sind, um das im Authentifizierungsdatenwert enthaltene Authentifizierungstoken an das Benutzergerät zu senden,
- zweite Empfangseinrichtungen (408), die eingerichtet sind, um ein Authentifizierungsergebnis (RES) und eine zweite Authentifizierungsnachricht ($MAC_4$) vom Benutzergerät zu empfangen, wobei die zweite Authentifizierungsnachricht von einem vorhergehenden Wert einer im Benutzergerät gespeicherten zweiten Sequenznummer ($SQN_c^{-1}$) abhängt,
- dritte Sendeeinrichtungen (409), die eingerichtet sind, um die zweite Authentifizierungsnachricht an den Authentifizierungsserver zu senden, wenn das vom Client-Gerät empfangene Authentifizierungsergebnis gleich dem vom Server empfangenen erwarteten Authentifizierungsergebnis ist.

**Claims**

1. Method for mutual authentication between a user equipment (UE) and a communication network, said network comprising a mobility management entity (MME) and a subscriber server (HSS), said method comprising:

- the user equipment receiving (E8) an authentication challenge comprising an authentication token (AUTN), which depends on a first index ($idx_{Op,c}$) and on a first authentication message ($MAC_1$) which is computed by the subscriber server and depends on a first sequence number ($SQN_{Op,c}$),
- the user equipment computing (E9) a second authentication message ($MAC_2$) on the basis of a current sequence number ($SQN_c$) referred to as the "second sequence number", which is stored by the user equipment (UE), and a third authentication message ($MAC_3$) on the basis of a preceding sequence number ($SQN_c^{-1}$) corresponding to the value which the current sequence number had during a preceding session associated with a successful mutual authentication,
- the user equipment checking (E9) that one of the conditions belonging to a set of conditions is met, said set of conditions comprising:

- the first authentication message ($MAC_1$) received from the server is equivalent to the second authentication message computed by the user equipment indicating that the first sequence number is identical to the second sequence number ($SQN_c$) stored in the user equipment, and

- the first authentication message ($MAC_1$) received from the server is equivalent to the third authentication message ($MAC_3$) computed by the user equipment indicating that the first sequence number is identical to the preceding sequence number ($SQN_c^{-1}$) and the first index is strictly greater than a second index ($idx_c$) stored in the user equipment,

- the user equipment computing and sending (E13), when one of the conditions is met, an authentication result (RES) and a fourth authentication message ($MAC_4$), which depends on the preceding sequence number, said authentication result being intended to be checked in order to authenticate the user equipment.

2. Method according to Claim 1, comprising, when the first sequence number ($SQN_{Op,c}$) is identical to the second sequence number ($SQN_c$):

   - the user equipment incrementing the second sequence number, and
   - the user equipment resetting the second index.

3. Method according to Claim 1, comprising, when the first sequence number is identical to the preceding sequence number and when the first index is strictly greater than a second index stored in the client equipment:

   - the user equipment storing the first index ($idx_{Op,c}$) in the second index ($idx_c$).

4. Authentication method according to Claim 1, further comprising:

   - the subscriber server receiving (E6) an authentication data request,
   - the subscriber server computing (E7) and sending an authentication datum (AV) comprising an expected authentication result (XRES) and the authentication token (AUTN) to the mobility management entity,
   - the subscriber server receiving (E15) the fourth authentication message ($MAC_4$), which depends on the preceding value ($SQN_{c-1}$) of the second sequence number stored in the user equipment,
   - the subscriber server computing a fifth authentication message ($MAC_4'$) by means of the first sequence number ($SQN_{Op,c}$) and the subscriber server comparing the fourth and the fifth authentication messages, the mutual authentication being successful when the two authentication messages are equivalent.

5. Method according to Claim 4, comprising, when the authentication is successful:

   - the subscriber server incrementing the first sequence number, and
   - the subscriber server resetting the index.

6. Method according to Claim 1, said method comprising:

   - the mobility management entity sending (E6) an authentication data request,
   - the mobility management entity receiving (E8) an authentication datum (AV) from the subscriber server, said authentication datum comprising an expected authentication result (XRES) which depends on a first sequence number ($SQN_{Op,c}$), and the authentication token (AUTN),
   - the mobility management entity sending (E8) the authentication token comprised in the authentication datum to the user equipment,
   - the mobility management entity receiving the authentication result (RES) and the fourth authentication message ($MAC_4$) from the user equipment,
   - the mobility management entity sending (E15) the authentication message to the subscriber server when the authentication result received from the client equipment is equivalent to the expected authentication result received from the server.

7. User equipment (UE) of a telecommunications network, said network comprising a mobility management entity (MME) and a subscriber server (HSS), comprising:

   - receiving means (206), arranged to receive an authentication challenge comprising an authentication token (AUTN), the authentication token depending on a first index ($idx_{Op,c}$) and on a first authentication message

($MAC_1$) which is computed by the subscriber server and depends on a first sequence number ($SQN_{Op,c}$),
- computing means, arranged to compute a second authentication message ($MAC_2$) on the basis of a current sequence number ($SQN_c$) referred to as the "second sequence number", which is stored by the user equipment (UE), and a third authentication message ($MAC_3$) on the basis of a preceding sequence number ($SQN_c^{-1}$) corresponding to the value which the current sequence number had during a preceding session associated with a successful mutual authentication,
- checking means (207), arranged to check that one of the conditions belonging to a set of conditions is met, said set of conditions comprising:

> - the first authentication message ($MAC_1$) received from the server is equivalent to the second authentication message computed by the user equipment indicating that the first sequence number is identical to the second sequence number ($SQN_c$) stored in the user equipment, and
> - the first authentication message ($MAC_1$) received from the server is equivalent to the third authentication message ($MAC_3$) computed by the user equipment indicating that the first sequence number is identical to the preceding sequence number ($SQN_c^{-1}$), and the first index is strictly greater than a second index ($idx_c$) stored in the user equipment,

- computing and sending means (208), arranged to compute and send, when one of the conditions is met, an authentication result (RES) and a fourth authentication message ($MAC_4$), which depends on the preceding sequence number, said authentication result being intended to be checked in order to authenticate the user equipment.

8. Program for a user equipment, comprising program code instructions intended to order the execution of the steps of the mutual authentication method according to any one of Claims 1 to 3 implemented by the user equipment, when the program is executed on said user equipment.

9. System for authentication in a telecommunications network, said system comprising a user equipment according to Claim 7, a mobility management entity (MME) and a subscriber server (HSS), said server comprising:

> - first receiving means (306), arranged to receive an authentication data request,
> - computing and sending means (307), arranged to compute and send an authentication datum (AV) comprising an expected authentication result (XRES) and an authentication token (AUTN), said authentication token depending on a first index ($idx_{Op,c}$) and on a first authentication message ($MAC_1$), which depends on a first sequence number ($SQN_{Op,c}$), to the mobility management entity,
> - second receiving means (308), arranged to receive a second authentication message ($MAC_4$), from the user equipment and transmitted by the mobility management entity, which depends on the preceding value ($SQN_c^{-1}$) of a second sequence number stored in the user equipment,
> - computing and comparing means (309), arranged to compute a third authentication message ($MAC_4'$) by means of the first sequence number ($SQN_{Op,c}$) and to compare the second and the third authentication messages, the mutual authentication being successful when the two authentication messages are equivalent.

10. Authentication system according to Claim 9, in which the mobility management entity comprises:

> - first sending means (405), arranged to send an authentication data request,
> - first receiving means (406), arranged to receive an authentication datum (AV) from the subscriber server, said authentication datum comprising an expected authentication result (XRES) which depends on a first sequence number ($SQN_{Op,c}$) stored in the subscriber server and an authentication token (AUTN), said authentication token depending on an index ($idx_{Op,c}$) and on a first authentication message ($MAC_1$) which depends on the first sequence number ($SQN_{Op,c}$),
> - second sending means (407), arranged to send the authentication token comprised in the authentication datum to the user equipment,
> - second receiving means (408), arranged to receive an authentication result (RES) and a second authentication message ($MAC_4$) from the user equipment, said second authentication message depending on a preceding value of a second sequence number ($SQN_c^{-1}$) stored in the user equipment,
> - third sending means (409), arranged to send the second authentication message to the authentication server when the authentication result received from the client equipment is equivalent to the expected authentication result received from the server.

Figure 1

UE

Figure 2

HSS

Figure 3

MME

Figure 4

**RÉFÉRENCES CITÉES DANS LA DESCRIPTION**

**Documents brevets cités dans la description**

- GB 2365688 A